(19) Europäisches Patentamt
European Patent Office
Office européen des brevets

(11) Publication number: 0 283 273 B1

(12) # EUROPEAN PATENT SPECIFICATION

(45) Date of publication of the patent specification: **12.12.90**

(51) Int. Cl.[5]: **G11B 5/704** // C09K19/38, C08G63/79, C08G63/91, C08G63/68, C08G63/60

(21) Application number: **88302308.7**

(22) Date of filing: **17.03.88**

(54) **Film for high density magnetic recording medium.**

(30) Priority: **19.03.87 JP 62694/87**

(43) Date of publication of application: **21.09.88 Bulletin 88/38**

(45) Publication of the grant of the patent: **12.12.90 Bulletin 90/50**

(84) Designated Contracting States: **DE FR GB**

(56) References cited:
**GB-A- 2 166 666**

**PATENT ABSTRACTS OF JAPAN volume 10, no. 252 (C-369)(2308), 29 August 1986; & JP-A-6178863**

(73) Proprietor: **NIPPON OIL CO. LTD., 3-12, 1-chome Nishi-Shinbashi, Minato-ku Tokyo 105(JP)**

(72) Inventor: **Hara, Hajime, 4-5-11, Kugenuma-Fujigaya, Fujisawa-shi Kanagawa-ken(JP)**
Inventor: **Toya, Tomohiro, 1178, Shinbashi-cho Totsuka-ku, Yokohama-shi Kanagawa-ken(JP)**
Inventor: **Iida, Shigeki, 155-72, Honmoku-Ohsatocho Naka-ku, Yokohama-shi Kanagawa-ken(JP)**
Inventor: **Satoh, Tetsuo, 1910-144, Kamariya-cho Kanazawa-ku, Yokohama-shi Kanagawa-ken(JP)**

(74) Representative: **Cropp, John Anthony David et al, MATHYS & SQUIRE 10 Fleet Street, London, EC4Y 1AY(GB)**

**EP 0 283 273 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a film for a magnetic recording medium capable of effecting high density recording suitable for magnetic video tape, floppy disk, etc.

The recent improvement in recording density of magnetic recording media is remarkable and efforts for attaining even higher density recording are under way.

As a base film for a magnetic recording medium there usually is employed a biaxially drawn polyethylene terephthalate film. Polyethylene terephthalate films are in wide use as base films for magnetic recording because their heat resistance is relatively good and they are superior in mechanical strength and weathering resistance and are relatively inexpensive.

However, with the recent increasing demand for higher density recording, higher image quality, longer operation time and reduced cassette size and weight, polyethylene terephthalate films have encountered a limit. For example, in order to attain longer operation time and reduced size and weight it is necessary that the base film be as thin as possible. But, in the use of polyethylene terephtalate films, there is a limit in point of film thickness because thin polyethylene terephthalate films are not rigid enough to handle or operate without trouble.

As examples of the method for attaining high density magnetic recording, mention may be made of vapor deposition of metal and vertical magnetization. In these methods it is desired to improve the heat resistance and dimensional stability of base films. Particularly, polyethylene terephthalate films have relatively poor dimensional stability caused by humidity, so they have been unsatisfactory in the use of high density magnetic recording media such as floppy disks and so on.

With a view to improving heat resistance there have been proposed polyimide films and aromatic polyamide films. However, it has heretofore been difficult to use those films becausee they are expensive and poor in an aqueous alkaline solutin and their humidity expansion coefficient is large.

## SUMMARY OF THE INVENTION

It is the object of the present invention to provide as base film for a magnetic recording medium capable of effecting high density recording, having a high tensile modulus, a small humidity expansion coefficient and a small intraplanar anisotropy of tensile modulus and of humidity expansion coefficient, while possessing the advantages of the biaxially oriented polyethylene terephthalate film.

The present invention resides in a film for a high density magnetic recording medium, consisting essentially of cholesteric liquid crystal polyester with an optically active component being copolymerized in a nematic or smectic liquid crystal polyester chain, and having a tensile modulus not smaller than 3 GPa, a humidity expansion coefficient not larger than $9 \times 10^{-6}$/%RH, and an anisotropy of tensile modulus and of humidity expansion coefficient not exceeding 2.

The cholesteric liquid crystal polyester used in the present invention is prepared by copolymerizing a nematic or smectic liquid crystal polyester with an optically active component. Such nematic or smectic liquid crystal polyester has at least two kinds of structural units selected from the following structural units (A), (B) and (C) as essential structural units and as mesogens: (A) structural units derived from aromatic diols, (B) structural units derived from dicarboxylic acids selected from aromatic dicarboxylic acids and cyclohexanedicarboxylic acids, and (C) structural units derived from aromatic hydroxycarboxylic acids. Preferably, the polyester has three kinds of structural units (A), (B) and (C).

The following are preferred examples of structural units derived from aromatic diols:

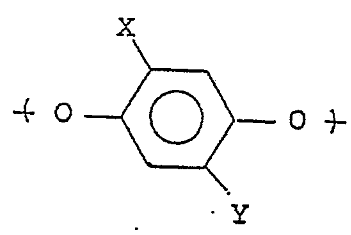

wherein X and Y each idependently represent hydrogen, halogen, or an alkyl group having not more than 4 carbon atoms,

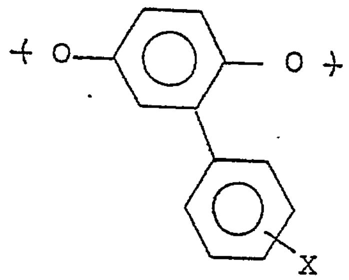

wherein X represents hydrogen, halogen, or an alkyl group having not more than 4 carbon atoms,

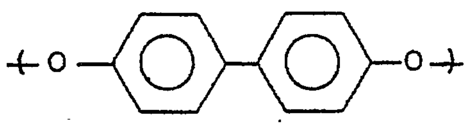

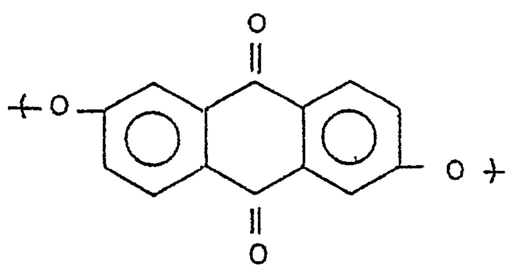

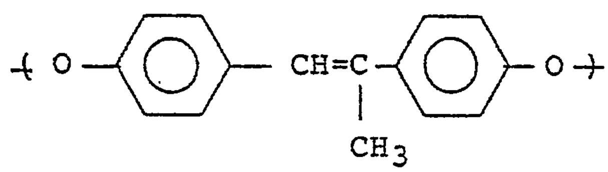

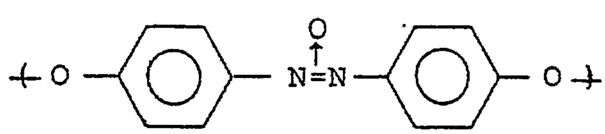

and

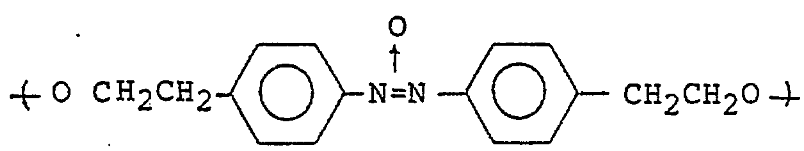

The following are preferred examples of structural units derived from aromatic dicarboxylic acids or cyclohexanedicarboxylic acids:

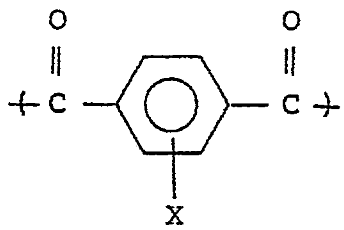

wherein X represents hydrogen, halogen, or an alkyl group having not more than 4 carbon atoms,

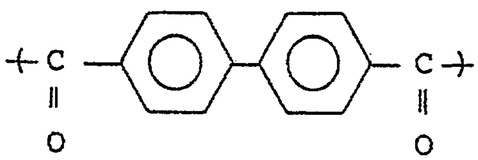

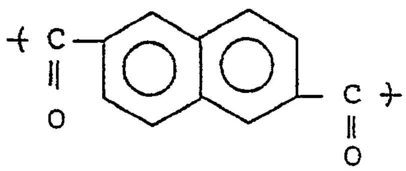

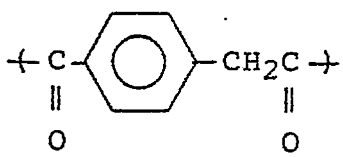

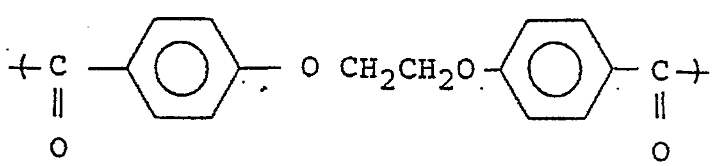

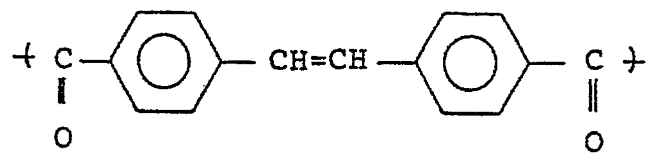

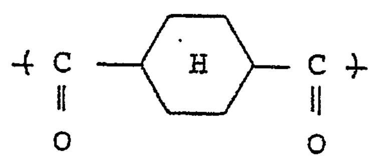

The following are preferred examples of structural units derived from aromatic hydroxycarboxylic acids:

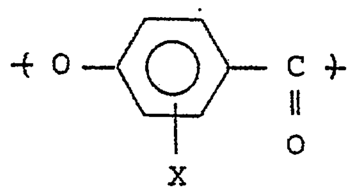

wherein X represents hydrogen, halogen, or an alkyl group having not more than 4 carbon stoms,

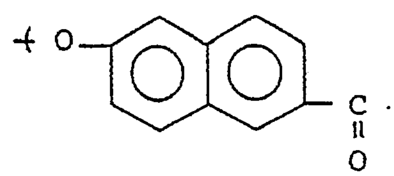

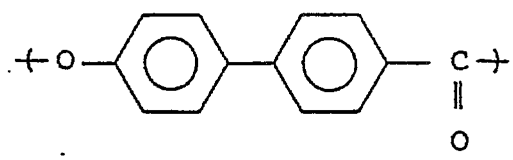

The cholesteric liquid crystal polyester is prepared by copolymerizing an aromatic polyester having such structural units as mesogens with an optically active component. As the optically active component there is used an optically active substance copolymerizable with such structural units. Particularly, bifunctional compounds are preferred in that they can be introduced into the polymer chain in any desired amount. Even monofunctional compounds capable of being introduced only in the ends of the polymer are employable if they exhibit cholesteric liquid crystallinity.

As examples of bifunctional optically active monomers are mentioned dicarboxylic acids such as (R) or (S) form of 3-methyladipic acid and benzoylglutamic acid; diols such as 1,2-propanediol and 2-methyl-1,4-butanediol; and hydroxy acids such as β-hydroxybutyric acid and β-hydroxyisobutyric acid. These may be used alone or as a mixture in the copolymerization. It is not always necessary to ensure an optical purity of 100%.

But in the case of an (R)–(S) form mixture, a helical pitch in cholesteric liquid crystal is larger than that in the case of a pure (R) or (S) form, so the efficiency of cholesteric twisting is poor. Generally, the difference in content between (S) and (R) forms should be not smaller than 15%, but preferably it is not smaller than 30%. The amount of the optically active component to be introduced will generally be in the range 0.5 to 20 mol%, and preferably 1 to 10 mol %.

The following units may be introduced into the cholesteric liquid crystal polyester of the present invention in order to adjust the melting point of the polyester.

Kink units, e.g. m-substitute benzene derivatives and 2,7-substituted naphthalene derivatives such as:

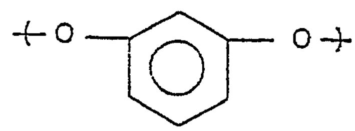

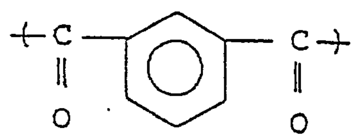

Monomer units containing a freely rotatable group between aromatic rings such as:

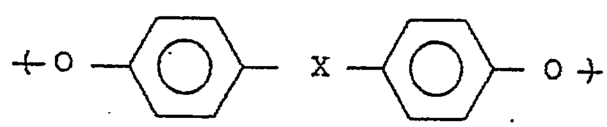

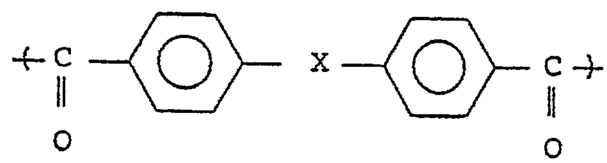

wherein X represents 0, $CH_2$, $C(CH_3)_2$, or $SO_2$.

And units derived from aliphatic diols or aliphatic dicarbonxylic acids represented by the following general formulae:

$-\!\!\!+ O-(CH_2)_m O +\!\!\!-$ ,  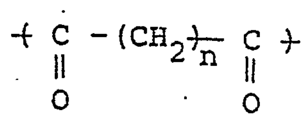

wherein m and n are each an integer of 2 to 12.

The cholesteric liquid crystal polyester of the present invention can be prepared, for example, by a method in which polycondensation is performed under dehydrochlorination using corresponding acid chloride and diol; a method in which acid dimethyl ester or diphenyl ester and diol are polycondensed at a high temperature; a method in which dicarboxylic acid and diacetate of diol are polycondensed at a high temperature in a high vacuum; or a method in which dicarboxylic acid and diol are directly polycondensed in the presence of a condensing agent such as a phosphorus compound. In the case of using hydroxycarboxylic acis, polycondensation can be conducted according to any of the above polymerizing methods.

In order to obtain the high performance film of the present invention, it is desirable to combine the above monomer units to obtain a polymer whose transition temperature from crystal to liquid crystal is in the range of 150° to 350°C. The amount of each monomer to be used is preferably selected so that the transition temperature from crystal to liquid crystal is within the above temperature range.

The cholesteric liquid crystal polymer used in the present invention can be formed into film by, for example, extrusion using a T die, injection molding, melt pressing, melt coating, or casting from a polymer solution. When shear force is applied to the polymer, it is necessary to mitigate the anisotropy by heating in the liquid crystal temperature region. But, the formation of cholesteric Granjean texture is not always necessary for the present invention. Polydomain state will also do, although tensile modulus and dimensional stability of polydomain films would be inferior to those of Grandjean texture films. In a flow casting method, the cholesteric liquid crystal polyester is dissolved in a solvent and the resulting solution is cast over the surface of a metallic plate or the like, allowing the solvent to evaporate, whereby there is obtained a thin film. Also in this case, there proceeds uniting of domain with heating at the liquid crystal

forming temperature and there is obtained a high performance film having Grandjean texture. After the heating, it is necessary to perform rapid cooling to below the melting point of the polymer.

The film of the present invention can be further improved in tensile strength and modulus by being subjected to heat treatment in a known manner. Further, a drawing operation may be adopted as an additional step, as in polyethylene terephthalate film.

The cholesteric liquid crystal polyester film of the present invention can have any arbitrary thickness according to how it is to be used. Usually its thickness is selected from the range of 2 to 200 μm, more commonly 5 to 100 μm, and when the film is to be used as a flexible floppy disk base, its thickness is preferably in the range of 30 to 100 μm.

The physical property values as referred to herein have been measured by the following methods.

(1) Humidity Expansion Coefficient

A thermal machine analyzer TMC-30 manufactured by Shimadzu Seisakusho Ltd. was placed in a thermohygrostatic chamber and measurement was made in the following manner. A 10 mm long by 5 mm wide film sample was used and a load of 250 g/cm$^2$ was applied. With the load applied the sample was exposed at 30°C to humidities of 30% RH and 80% RH. Humidity expansion coefficient was determined by reading dimensional changes observed between the conditions of 30°C, 30% RH and 30°C, 80% RH.

(2) Tensile modulus was determined on film specimens 25 mm long under the conditions of elongation speed 10 mm/min, using a measuring apparatus TENSILON UTM-III-100 manufactured by Toyo Boldline Co.

(3) Intraplanar anisotropy of humidity expansion coefficient and that of tensile modulus were each determiner by measuring anisotropy in various directions every 30° and dividing a maximum value by a minimum value.

Even without drawing, the cholesteric liquid crystal polyester film of the present invention exhibits tensile modulus equal to or even higher than that of a biaxially drawn polyethylene terephthalate film, and the anisotropy of its tensile modulus is small. On the other hand, a nematic liquid crystal film exhibits a large anisotropy of its tensile modulus. Further, the humidity expansion coefficient of the film of the present invention is not greater than one-third of that of a biaxially drawn polyethylene terephthalate film, and its anisotropy is small. The cholesteric liquid crystal film of the present invention has a tensile modulus not smaller than 3 GPa, a humidity expansion coefficient not larger than 9 x $10^{-6}$/% RH, and an anisotropy not exceeding 2. Thus, the film of the present invention is superior in all of heat resistance, rigidity and dimensional stability, and the anisotropy of these physical properties is small. In view of these characteristics it can be said that the film of the present invention is extremely superior as a base film for high density magnetic recording tape or floppy disk.

The following examples are given to illustrate the present invention more concretely, but it is to be understood that the invention is not limited thereto.

Example 1

15.55 g of polyethylene terephthalate having an inherent viscosity ($\eta$ inh) of 0.37 dℓ/g as measured at 30°C at a concentration of 0.5 wt.% using a mixed solvent of phenol/tetrachloroethane = 60/40 (weight ratio) (the following $\eta$ inh values are also according to this measuring method unless otherwise mentioned), 34.02 g of p-acetoxybenzoic acid, 4.33 g of (R)-3-methyladipic acid and 5.24 g of hydroquinone diacetate were fed into a polymerization tube equipped with a stirrer (the proportion of the (R)-3-methyladipic acid as an optically active monomer is 6.7 mol% of the total monomer units). After purging with nitrogen, the polymerization tube was placed in an oil bath held at 220°C and reaction was allowed to take place for 1 hour in a nitrogen atmosphere with stirring. Then, the temperature was raised to 230°C and reaction was allowed to proceed for another 1 hour. The passing of nitrogen was started at 230°C and reaction allowed to proceed for 1 hour, then under reduced pressure the reaction was continued for 1 hour. The reaction temperature was raised from 230°C to 270°C over a period of about 30 minutes. The degree of vacuum was maintained at 0.2 mmHg at 270°C for 3 hours to complete the polymerization. The resulting polymer was found to have an inherent viscosity ($\eta$ inh) of 0.87 dℓ/g.

1 g of the polymer was placed on the central part of two polyimide films in which a metal shim was inserted to adjust a film thickness and to make a unidirectional flow, and heated to 280°C. Then the melt was made to flow using a press and allowed to stand for 15 minutes in the pressurized state, followed by quenching with ice water to obtain a film having a thickness of about 90 μm.

This film had a tensile modulus of 5.1 GPa and a humidity expansion coefficient of 2.8 x $10^{-6}$/% RH. Anisotropy of tensile modulus and that of humidity expansion coefficient were 1.5 and 1.2, respectively.

Example 2

The polymer prepared in Example 1 was dissolved in a mixed solvent of phenol/tetrachloroethane = 60/40 (weight ratio) to obtain a 15% solution thereof. Then, the solution was applied onto a Teflon-coated iron plate by means of a roll coater. The solvent was evaporated and then heating was made at 230°C for

30 minutes, followed by quenching with ice water to obtain a film having a thickness of 20 μm. This film had a tensile modulus of 4.4 GPa and a humidity expansion coefficient of 2.8 x $10^{-6}$/% RH. Anisotropy of tensile modulus and that of humidity expansion coefficient were both 1.1.

Example 3

(2) Preparation of Copolyester

194 g of dimethyl terephthalate, 94.4 g of ethylene glycol, 21.7 g of (S)-2-methyl-1,4-butanediol and 77 mg of n-butyl orthotitanate were fed into a reactor equipped with a stirrer. After purging with nitrogen, reaction was allowed to take place at 180°C for 2 hours while passing nitrogen. Further, stirring was performed 1 hour at 200°C, allowing the bulk of methanol to be distilled off.
Thereafter, the degree of vacuum was raised slowly and at the same time the bath temperature was also raised from 200°C to 250°C. After the conditions of 250°C, 0.5 mmHg were attained over a period of about 1 hour, stirring was continued 0.5 hour under the same conditions to complete the polymerization. The resulting polymer was found to have an inherent viscosity (η inh) of 0.25 dℓ/g.

(2) Preparation of Cholesteric Liquid Crystal Polyester

11.8 g of the copolyester prepared above, 24.8 g of p-hydroxybenzoic acid and 7.2 mg of stannous acetate were fed into a reactor equipped with a stirrer. After purging with nitrogen, reaction was allowed to take place at 240°C for 2 hours while passing nitrogen. Then, 18.2 g of acetic anhydride was added and stirring was performed for 1.5 hours. The temperature was raised to 275°C while distilling off acetic acid. Thereafter, acetic acid was distilled off completely under reduced pressure. Stirring was continued for 5 hours while maintaining the degree of vacuum at 0.5 mmHg to complete the polymerization. There was obtained a polymer having an inherent viscosity (η inh) of 0.67 dℓ/g.

The polymer was pressed at 280°C for 15 minutes in the same way as in Example 1 to obtain a film having a thickness of about 70 μm.
This film had a tensile modulus of 6.2 GPa and a humidity expansion coefficient of 2.1 x $10^{-6}$/% RH. Anisotropy of tensile modulus and that of humidity expansion coefficient were 1.4 and 1.1, respectively.

Example 4

The polymer prepared in Example 3 was dissolved in a mixed phenol/tetrachloroethane solvent and a cast film having a thickness of about 10 μm was formed in the same way as in Example 2. This film had a tensile modulus of 8.3 GPa and a humidity expansion coefficient of 2.0 x $10^{-6}$/% RH. Anisotropy of tensile modulus and that of humidity expansion coefficient were both 1.0.

Example 5

Hydroxybenzoic acid and (S)-2-methyl-1,4-butanediol were reacted to prepare 2-methyl-1,4-bis [4-acetoxybenzoyloxy]butane. This compound will hereinafter be referred to as "optically active monomer".
5.75 g of 6-acetoxy-2-naphthoic acid, 13.50 g of p-acetoxybenzoic acid, 2.14 g of the optically active monomer prepared above, 0.83 g of terephthalic acid and, as catalyst, 1.4 g of sodium acetate were fed into a polymerization tube equipped with a stirrer.

After purging with nitrogen, the polymerization tube was held at 240°C and reaction was allowed to take place 1 hour under a nitrogen gas stream, then at 280°C for 1 hour and thereafter at 320°C for 0.5 hour. Then, the degree of vacuum was held at 0.5 mmHg at 320°C and reaction was allowed to proceed for 0.5 hour. Lastly, the temperature was raised to 340°C and stirring was continued for 1 hour to complete the polymerization. The resulting polymer was found to have an inherent viscosity (η inh) of 3.9 dl/g as measured at 60°C at a concentration of 0.1 wt.% using a pentafluorophenol solvent.

The polymer was pressed at 320°C for 15 minutes in the same manner as in Example 1 to obtain a film having a thickness of about 70 mm. The fillm had a tensile modulus of 5.5 GPa and a humidity expansion coefficient of 2.5 × $10^{-6}$/% RH. Anisotropy of tensile modulus and that of humidity expansion coefficient were 1.5 and 1.2, respectively.

Comparative Example 1

A nematic liquid crystal polyester (40 mol% polyethylene terephthalate units, 60 mol% hydroxybenzoate units, η inh = 0.65 dl/g) prepared from polyethylene terephthalate and p-acetoxybenzoic acid was formed at 270°C into a film having a thickness of about 80 μm.

This film had a tensile modulus of 3.1 GPa and a humidity expansion coefficient of 3.4 x $10^{-6}$/% RH. Anisotropy of tensile modulus and that of humidity expansion coefficient were 2.8 and 1.5, respectively.

Comparative Example 2

A biaxially oriented polyethylene terephthalate film having a thickness of 80 μm was found to have a tensile modulus of 4.9 GPa and a humidity expansion coefficient of 9.7 x $10^{-6}$/% RH. Anisotropy of tensile modulus and that of humidity expansion coefficient were 1.0 and 1.1, respectively.

The results obtained above are as tabulated below.

Table 1

| Example | Film Thickness | Tensile Modulus | | Humidity Expansion Coefficient | |
|---|---|---|---|---|---|
| | | (GPa) | Anisotropy | $\times 10^{-6}$ / %RH | Anisotropy |
| Ex. 1 | 90 | 5.1 | 1.5 | 2.8 | 1.2 |
| Ex. 2 | 20 | 4.4 | 1.1 | 2.8 | 1.1 |
| Ex. 3 | 70 | 6.2 | 1.4 | 2.1 | 1.1 |
| Ex. 4 | 10 | 8.3 | 1.0 | 2.0 | 1.0 |
| Ex. 5 | 70 | 5.5 | 1.5 | 2.5 | 1.2 |
| Comp. Ex. 1 | 80 | 3.1 | 2.8 | 3.4 | 1.5 |
| Comp. Ex. 2 | 80 | 4.9 | 1.0 | 9.7 | 1.1 |

**Claims**

1. A film for a high density magnetic recording medium, consisting essentially of a cholesteric liquid crystal polyester, with an optically acitve component being copolymerized in a nematic or smectic liquid crystal polyester, said film having a tensile modulus not smaller than 3 GPa, a humidity expansion coefficient not larger than 9 x $10^{-6}$/% RH, and an anisotropy of tensile modulus and that of humidity expansion coefficient each not exceeding 2.

2. A film for a high density magnetic recording medium as set forth in Claim 1, wherein the nematic or smectic liquid crystal polyester has as mesogens at least two structural units selected from (A) structural units derived from aromatic diols, (B) structural units derived from dicarboxylic acids selected from aromatic dicarboxylic acids and cyclohexanedicarboxylic acids and (C) structural units derived from aromatic hydroxycarboxylic acids.

3. A film for a high density magnetic recording medium as set forth in Claim 2, wherein the nematic or smectic liquid crystal polyester has the three structural units (A), (B) and (C).

4. A film for a high density magnetic recording medium as set forth in Claim 2 or Claim 3, wherein the structural unit (A) is at least one of the following structural units:

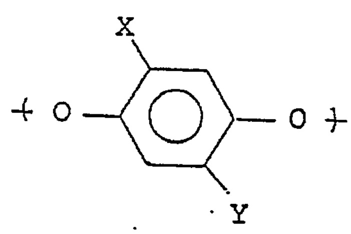

wherein X and Y each independently represent hydrogen, halogen, or an alkyl group having not more than 4 carbon atoms,

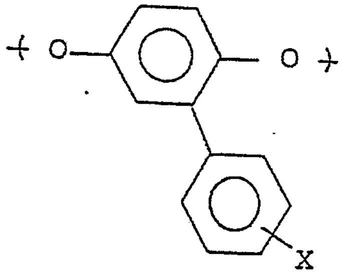

wherein X represents hydrogen, halogen, or an alkyl group having not more than 4 carbon atoms,

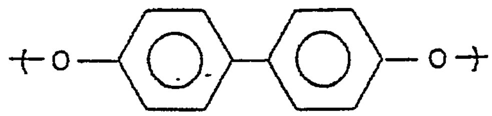

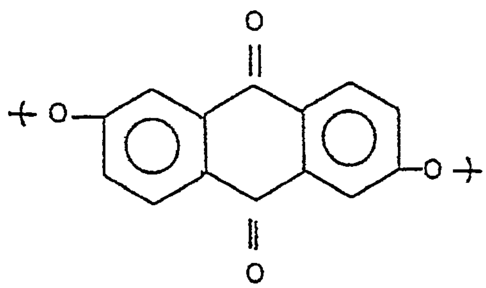

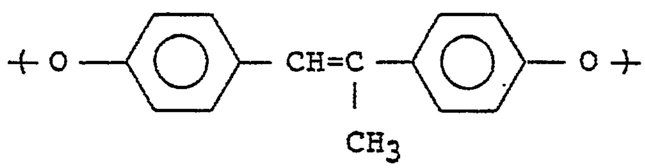

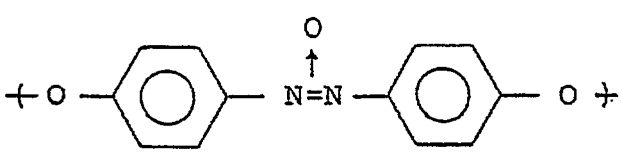

and

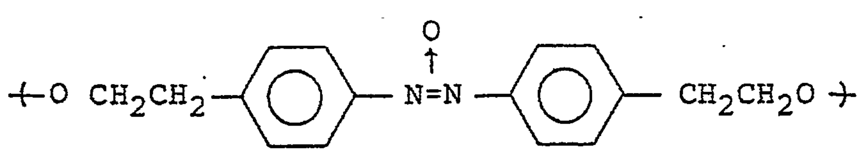

5. A film for a high density magnetic recording medium as set forth in Claim 2, Claim 3 or Claim 4, wherein the structural unit (B) is at least one of the following structural units:

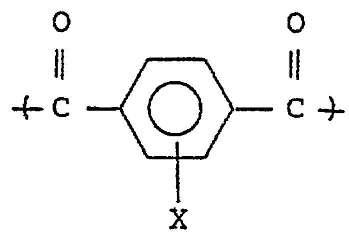

wherein X represents hydrogen, halogen, or an alkyl group having not more than 4 carbon atoms,

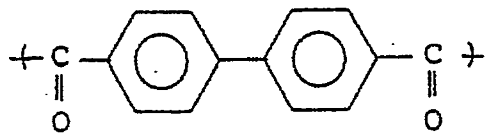

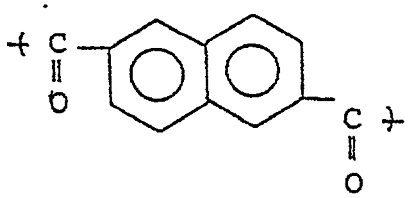

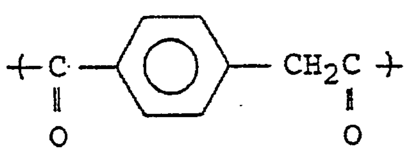

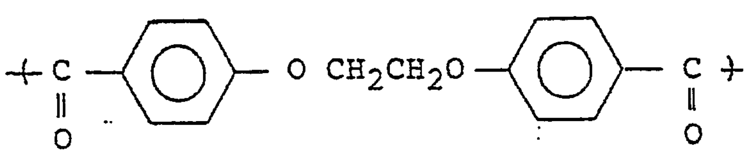

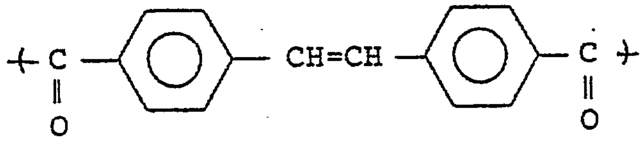 and

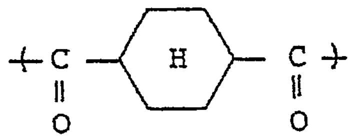

6. A film for a high density magnetic recording medium as set forth in any one of Claims 2 to 5, wherein the structural unit (C) is at least one of the following structural units:

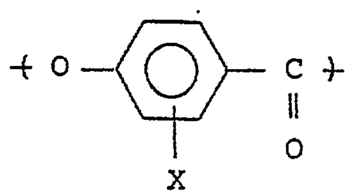

wherein X represents hydrogen, halogen, or an alkyl group having not more than 4 carbon atoms,

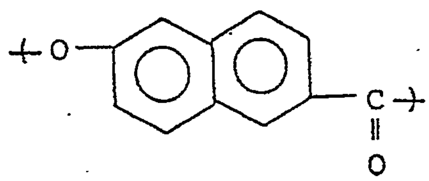 and

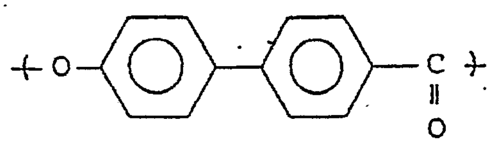

7. A film for a high density magnetic recording medium as set forth in any one of Claims 1 to 6, wherein the optically active component is at least one compound selected from optically active dicarboxylic acids diols and hydroxy acids, and mixtures thereof.

8. A film for a high density magnetic recording medium as set forth in any one of Claims 1 to 7, wherein the content of the optically active component is in the range of 0.5 to 20 mol percent based on the total monomer units.

9. A film for a high density magnetic recording medium as set forth in any one of Claims 1 to 8, having a thickness in the range of 2 to 200 μm.

10. A film for a high density magnetic recording medium as set forth in any one of Claim 1 to 9, which is in an undrawn state.

## Patentansprüche

1. Film für ein magnetisches Aufzeichnungsmedium hoher Dichte, bestehend im wesentlichen aus einem cholesterischen Flüssigkristall-Polyester, der mit einer optisch aktiven Komponente in einen nematischen oder smektischen Flüssigkristall-Polyester copolymerisiert ist, wobei der Film ein Dehnungsmodul nicht kleiner als 3 GPa, einen Feuchtigkeits-Ausdehnungskoeffizient nicht größer als 9 x $10^{-6}$/% RH und eine Anisotropie des Dehnungsmoduls und des Feuchtigkeits-Ausdehnungskoeffizienten aufweist, die jeweils 2 nicht überschreiten.

2. Film für ein magnetisches Aufzeichnungsmedium hoher Dichte nach Anspruch 1, worin der nematische oder smektische Flüssigkristall-Polyester als Mesogene wenigstens 2 Struktureinheiten aufweist, die ausgewählt sind unter (A) Struktureinheiten, die von aromatischen Diolen abgeleitet sind, (B) Struktureinheiten, die von Dicarbonsäuren abgeleitet sind, die gewählt sind unter aromatischen Dicarbonsäuren und Cyclohexandicarbonsäuren, und (C) Struktureinheiten, die von aromatischen Hydroxycarbonsäuren abgeleitet sind.

3. Film für ein magnetisches Aufzeichnungsmedium hoher Dichte nach Anspruch 2, worin der nematische oder smektische Flüssigkristall-Polyester die drei Struktureinheiten (A), (B) und (C) aufweist.

4. Film für ein magnetisches Aufzeichnungsmedium hoher Dichte nach Anspruch 2 oder Anspruch 3, worin die Struktureinheit (A) wenigstens eine der folgenden Struktureinheiten ist:

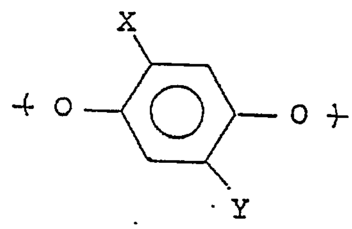

worin X und Y jeweils unabhängig voneinander für Wasserstoff, Halogen oder eine Alkylgruppe mit nicht mehr als 4 Kohlenstoffatomen stehen,

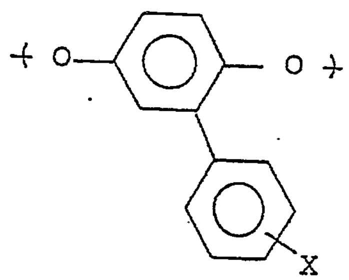

worin X für Wasserstoff, Halogen oder eine Alkylgruppe mit nicht mehr als 4 Kohlenstoffatomen steht,

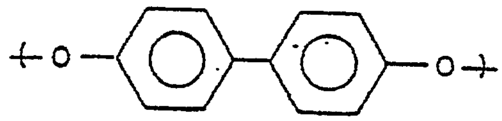

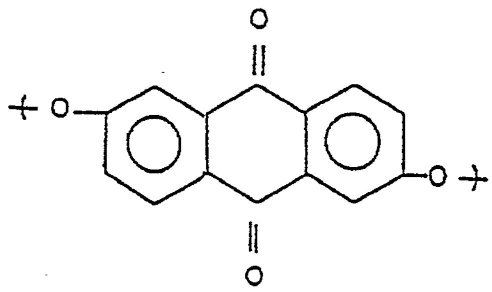

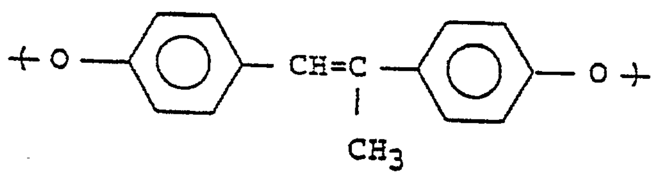

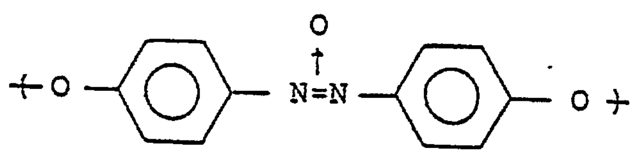

und

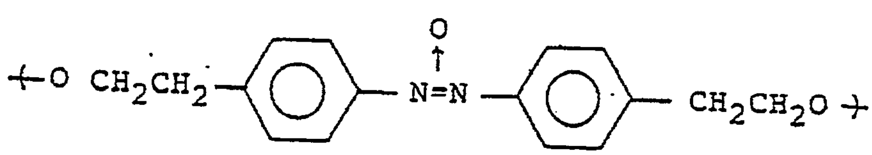

5. Film für ein magnetisches Aufzeichnungsmedium hoher Dichte nach Anspruch 2, Anspruch 3 oder Anspruch 4, worin die Struktureinheit (B) wenigstens eine der folgenden Struktureinheiten ist:

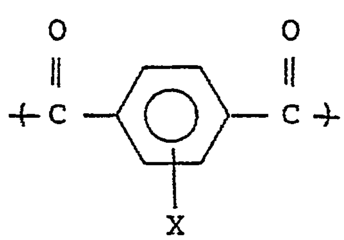

worin X für Wasserstoff, Halogen oder eine Alkylgruppe mit nicht mehr als 4 Kohlenstoffatomen steht,

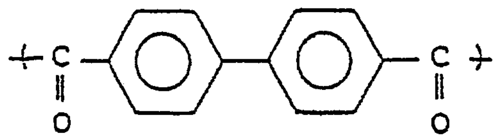

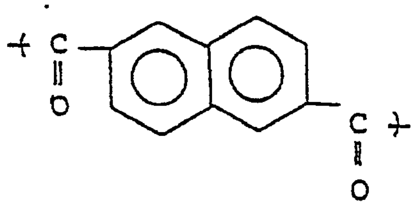

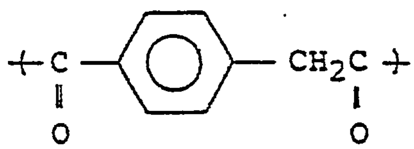

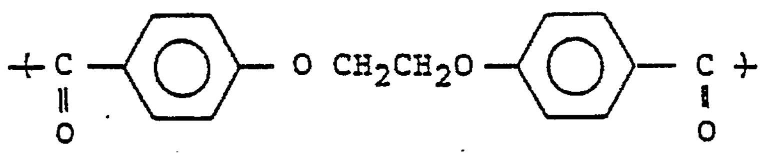

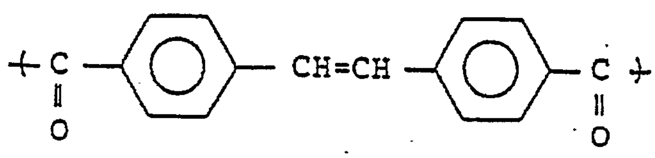

und

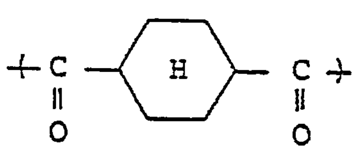

6. Film für ein magnetisches Aufzeichnungsmedium hoher Dichte nach einem der Ansprüche 2 bis 5, worin die Struktureinheit (C) wenigstens eine der folgenden Struktureinheiten ist:

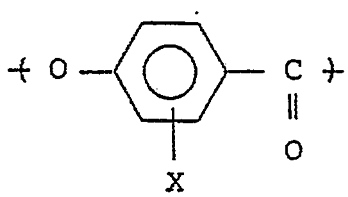

worin X für Wasserstoff, Halogen oder eine Alkylgruppe mit nicht mehr als 4 Kohlenstoffatomen steht,

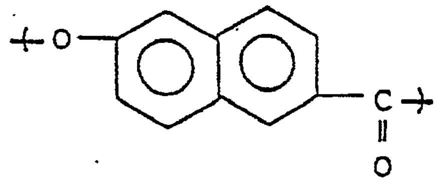

und

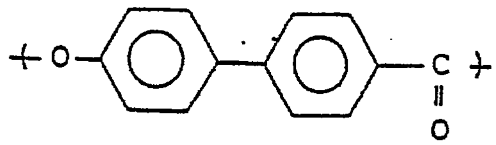

7. Film für ein magnetisches Aufzeichnungsmedium hoher Dichte nach einem der Ansprüche 1 bis 6, worin die optisch aktive Komponente wenigstens eine Verbindung ist, die gewählt ist unter optisch aktiven Dicarbonsäuren, Diolen und Hydroxysäuren und deren Mischungen.

8. Film für ein magnetisches Aufzeichnungsmedium hoher Dichte nach einem der Ansprüche 1 bis 7, worin der Gehalt der optisch aktiven Komponente im Bereich von 0,5 bis 20 Mol-% liegt, bezogen auf die gesamten Monomereinheiten.

9. Film für ein magnetisches Aufzeichnungsmedium hoher Dichte nach einem der Ansprüche 1 bis 8, welcher eine Dicke im Bereich von 2 bis 200 µm aufweist.

10. Film für ein magnetisches Aufzeichnungsmedium hoher Dichte nach einem der Ansprüche 1 bis 9, welcher im ungereckten Zustand vorliegt.

## Revendications

1. Film pour support d'enregistrement magnétique à haute densité, composé essentiellement d'un polyester à cristaux liquides cholestériques, contenant un composant optiquement actif qui a été copolymérisé dans un polyester à cristaux liquides nématiques ou smectiques, ledit film présentant un module d'élasticité d'au moins 3 GPa, un coefficient d'expansion à l'humidité d'au plus 9 x $10^{-6}$/% d'humidité relative (HR), et une anisotropie respectivement du module d'élasticité et du coefficient d'expansion à l'humidité qui n'excède pas 2.

2. Film pour support d'enregistrement magnétique à haute densité selon la revendication 1, caractérisé en ce que le polyester à cristaux liquides nématiques ou smectiques comporte comme mésogènes au moins deux unités structurales choisies parmi (A) des unités structurales issues de diols aromatiques, (B) des unités structurales issues d'acides dicarboxyliques choisis parmi des acides dicarboxyliques aromatiques et des acides cyclohexanedicarboxyliques et (C) des unités structurales issues d'acides hydroxycarboxyliques aromatiques.

3. Film pour support d'enregistrement magnétique à haute densité selon la revendication 2, caractérisé en ce que le polyester à cristaux nématiques ou smectiques comporte les trois unités structurales (A), (B) et (C).

4. Film pour support d'enregistrement magnétique à haute densité selon l'une des revendications 2 et 3, caractérisé en ce que l'unité structurale (A) est au moins une des unités structurales suivantes:

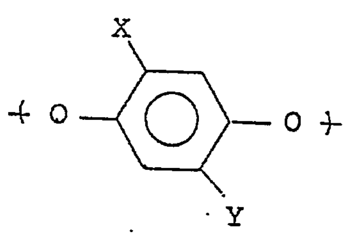

dans laquelle X et Y représentent chacun indépendamment l'hydrogène, l'halogène ou un groupe alkyle n'ayant pas plus de 4 atomes de carbone,

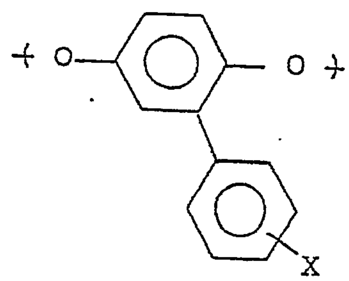

dans laquelle x représente l' hydrogène ou un groupe alkyle n'ayant pas plus de 4 atomes de carbone,

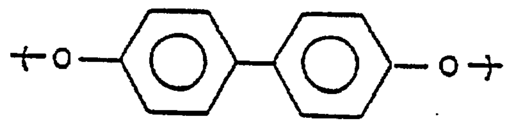

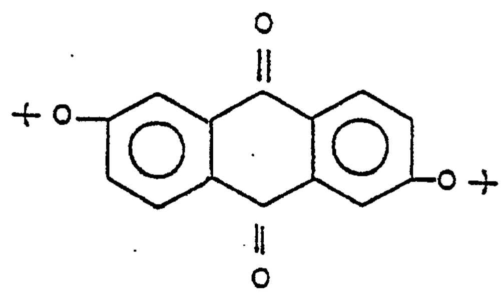

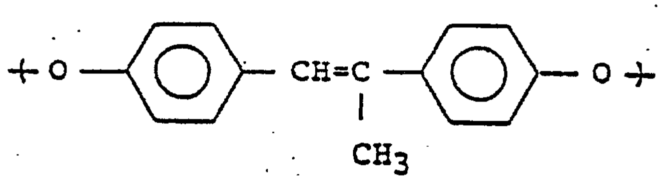

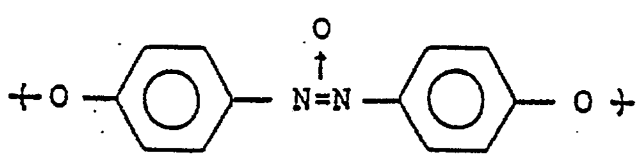

et

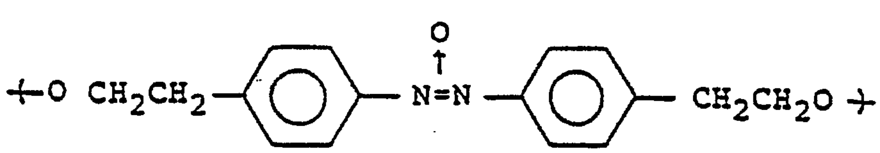

5. Film pour support d'enregistrement magnétique à haute densité selon l'une des revendications 2 à 4, caractérisé en ce que l'unité structurale (B) est au moins une des unités structurales suivantes:

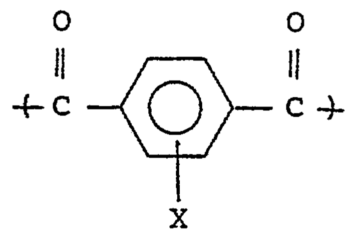

dans laquelle X représente l'hydrogène, l'halogène ou un groupe alkyle n'ayant pas plus de 4 atomes de carbone,

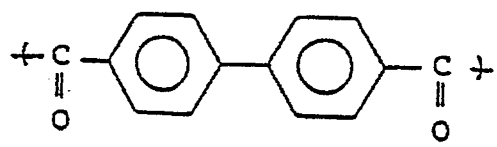

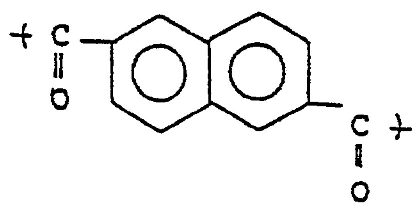

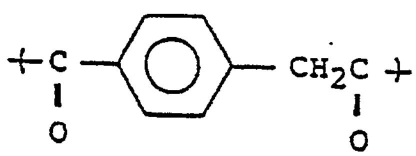

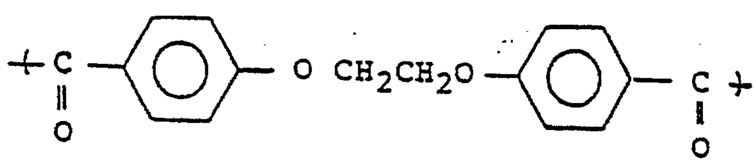

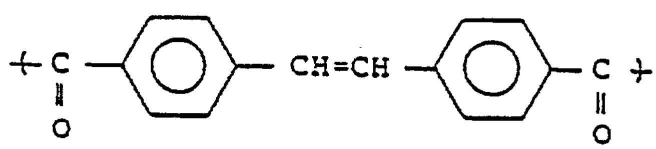

et

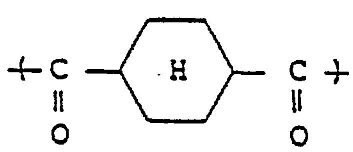

6. Film pour support d'enregistrement magnétique à haute densité selon l'une quelconque des revendications 2 à 5, caractérisé en ce que l'unité structurale (c) est au moins une des unités structurales suivantes:

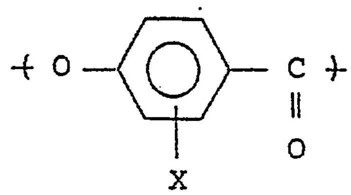

dans laquelle X représente l'hydrogène, l'halogène ou un groupe alkyle n'ayant pas plus de 4 atomes de carbone,

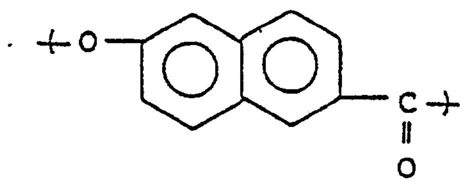

et

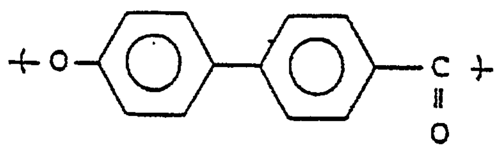

7. Film pour support d'enregistrement magnétique à haute densité selon l'une quelconque des revendications 1 à 6, caractérisé en ce que le composant optiquement actif est au moins un composé choisi parmi des acides dicarboxyliques, des diols et des acides hydroxyliques optiquement actifs ou des mélanges de ceux-ci.

8. Film pour support d'enregistrement magnétique à haute densité selon l'une quelconque des revendications 1 à 7, caractérisé en ce que la proportion du composant optiquement actif est de l'ordre de 0,5 à 20% en moles par rapport à la quantité totale d'unités monomères.

9. Film pour support d'enregistrement magnétique à haute densité selon l'une quelconque des revendications 1 à 8, caractérisé en ce qu'il a une épaisseur de l'ordre de 2 à 200 μm.

10. Film pour support d'enregistrement magnétique à haute densité selon l'une quelconque des revendications 1 à 9, caractérisé en ce qu'il se présente sous une forme non étirée.